# EUROPÄISCHE PATENTSCHRIFT

(11) **EP 3 414 085 B1**
(45) Veröffentlichungstag und Bekanntmachung des Hinweises auf die Patenterteilung: **19.02.2020**
(21) Anmeldenummer: 16815810.3
(22) Anmeldetag: 15.12.2016
(51) Int. Cl.: B29D 30/70, B60C 19/08, B29C 43/28, B29D 30/38, B29K 105/10, B29K 105/14, B29C 70/88

(54) **VERFAHREN ZUR HERSTELLUNG EINER MATERIALBAHN, IHRE VERWENDUNG ALS VERSTÄRKUNGSLAGE FÜR EINEN ELASTOMERARTIKEL UND FAHRZEUGLUFTREIFEN**
METHOD FOR PRODUCING A MATERIAL WEB, USE THEREOF AS A REINFORCING PLY FOR AN ELASTOMER ITEM, AND VEHICLE PNEUMATIC TYRES
PROCÉDÉ POUR LA FABRICATION D'UNE BANDE DE MATÉRIAU, SON UTILISATION COMME NAPPE DE RENFORCEMENT POUR UN OBJET ÉLASTOMÈRE ET PNEUMATIQUE POUR VÉHICULES

(30) Priorität: 09.02.2016 DE 102016201926
(43) Veröffentlichungstag der Anmeldung: 19.12.2018
(73) Patentinhaber: Continental Reifen Deutschland GmbH, 30165 Hannover (DE)
(72) Erfinder: KENDZIORRA, Norbert, 30827 Garbsen (DE); WEBER, Christian, 30826 Garbsen (DE)
(74) Vertreter: Finger, Karsten
(86) Internationale Anmeldenummer: PCT/EP2016/081096
(87) Internationale Veröffentlichungsnummer: WO 2017/137122

(56) Entgegenhaltungen:
- WO-A1-2012/161238
- DE-A1-102010 017 444
- DE-A1-102010 037 004
- DE-A1-102011 000 361
- DE-B- 1 174 493
- US-A- 3 244 572
- US-A- 3 763 912
- US-A1- 2011 174 420
- US-A1- 2011 308 675

## Beschreibung

Die Erfindung betrifft ein Verfahren zur Herstellung einer Materialbahn aus in eine Kautschukmischung eingebetteten parallel zueinander verlaufenden Festigkeitsträgern aus Stahl, mit folgenden Schritten:
a) Herstellung einer eine Oberplatte bildenden Kautschukmischungsbahn und einer zweiten, eine Unterplatte bildenden Kautschukmischungsbahn,
b) unter Spannung Hindurchführen einer Festigkeitsträgerbahn aus einer Vielzahl von parallel zueinander verlaufenden Festigkeitsträgern durch den Walzenspalt eines Walzenkalanders,
c) Hindurchführen der Oberplatte von der einen Seite und der Unterplatte von der anderen Seite der Festigkeitsträgerbahn durch den Walzenspalt des Walzenkalanders unter Zusammenfügen mit der Festigkeitsträgerbahn.

Die Erfindung betrifft ferner die Verwendung einer erfindungsgemäß hergestellten Materialbahn.

Materialbahnen aus in Kautschukmischungen, sogenannten Gummierungsmischungen, eingebetteten, parallel zueinander verlaufenden Festigkeitsträgern aus Stahl werden insbesondere zur Herstellung von Gürtellagen in Fahrzeugluftreifen, aber auch zur Herstellung von Verstärkungslagen in anderen Elastomerartikeln, beispielsweise Fördergurten, verwendet. Die Stahlkorde an sich sind elektrisch leitfähig, jedoch ist ihre elektrische Leitfähigkeit in der Verstärkungslage, beispielsweise einer Gürtellage eines Fahrzeugluftreifens, nicht nutzbar. Zudem ist die elektrische Leitfähigkeit des Gummierungsmaterials meist ebenfalls sehr gering bzw. ist dieses Material elektrisch nicht leitend.

Aus der DE 1 174 493 B ist ein Verfahren zur Herstellung einer für eine Gürtellage vorgesehenen Materialbahn aus in eine Kautschukmischung eingebetteten parallel zueinander verlaufenden Festigkeitsträgern aus Stahl bekannt. Dabei wird eine die Unterplatte bildende Kautschukmischungsbahn extrudiert, in welcher nachfolgend mittels einer Rolle Rillen ausbildet werden. In diesen Rillen werden zurechtgeschnittene Festigkeitsträger aus Stahl positioniert, welche nachfolgend mittels eines Walzenpaares, durch welches die Kautschukmischungsbahn durchgeführt wird, in die Kautschukmischungsbahn eingedrückt werden. Ein weiterer Extruder stellt eine die Oberplatte bildende Kautschukmischungsbahn bereit, welche über ein weiteres Walzenpaar mit der die Unterplatte bildenden, die Festigkeitsträger aufweisenden Kautschukmischungsbahn zu einer Festigkeitsträgerbahn verbunden wird. Dieses Verfahren soll eine maßgenaue, rationelle und fortlaufende Herstellung einer Festigkeitsträger enthaltenden Materialbahn ermöglichen.

Um eine elektrisch leitende Verbindung zwischen einem elektrisch nicht leitfähigen Laufstreifen eines Fahrzeugluftreifens, welcher beispielsweise Kieselsäure als Füllstoff enthält, und der Felge herzustellen, ist es aus der US 8,869,857 B2 bekannt, im Laufstreifen einen sogenannten "Carbon Center Beam" einzubauen, welcher mit einer elektrisch leitfähigen Unterplatte in Kontakt steht, die ihrerseits mittels in Umfangsrichtung auf den Gürtellagen umlaufenden elektrisch leitfähigen Elementen und mit einem weiteren, auf der Karkasse verlaufenden elektrisch leitfähigen Element in Kontakt steht, welches seinerseits die Felge berührt. Die elektrisch leitfähigen Elemente können schmale Streifen aus elektrisch leitfähigem Gummimaterial sein.

Der Erfindung liegt die Aufgabe zugrunde, mit parallel zueinander verlaufenden Stahlkorden versehene Verstärkungslagen, insbesondere Gürtellagen in Fahrzeugluftreifen, als isolierte, elektrisch leitende Platten verwenden zu können, sodass etwa Gürtellagen beispielsweise zur Stromversorgung von im Reifen eingebauten elektrischen Verbrauchern, wie Sensoren, Aktuatoren und dergleichen, verwendet werden können oder benachbarte Gürtellagen mittels Durchstichsensoren verbunden werden können, um Verletzungen des Gürtels durch von außen eindringende metallische Teile, wie beispielsweise Nägel, durch Änderung des elektrischen Widerstandes feststellen zu können.

Gelöst wird die gestellte Aufgabe erfindungsgemäß dadurch, dass die Festigkeitsträgerbahn vor oder bei ihrem Eintritt in den Walzenspalt mit einer Vielzahl von jeweils zumindest einen Teil der Festigkeitsträger zumindest im Wesentlichen quer zur Erstreckungsrichtung der Festigkeitsträgerbahn kontaktierenden Fäden versehen wird, welche aus elektrisch nicht leitenden textilen Trägerfäden bestehen, die mit einer Beschichtung aus einem elektrisch leitenden Material versehen sind.

Beim Durchtritt durch den Walzenkalander verbindet sich die Beschichtung der Fäden mit dem Gummimaterial der Ober- und der Unterplatte und bildet derart eine Vielzahl elektrisch leitender Passagen zwischen jeweils einer Anzahl von Festigkeitsträgern. Dabei dienen die elektrisch nicht leitfähigen Trägerfäden lediglich zur "Übertragung" der elektrisch leitfähigen Beschichtung in die Gummierungsmischung, ihre mechanischen Eigenschaften, etwa ihre Festigkeit, sind nicht von Bedeutung. Die Trägerfäden können bereits beim Kalandriervorgang und/oder im Gebrauch des vulkanisierten Produktes, etwa des Fahrzeugluftreifens, ohne weiteres brechen bzw. zerstört werden. Wesentlich ist, dass im Gummimaterial eingebettete elektrisch leitende Passagen entstehen, sodass beispielsweise Gürtellagen als elektrisch leitende "Platten" fungieren können. So sind etwa Durchstichsensoren in der Lage, durch die Änderung des elektrischen Widerstandes festzustellen, ob beispielsweise ein metallischer Gegenstand in den Gürtelverband eingedrungen ist.

Es gibt eine Anzahl von Möglichkeiten, im Rahmen der Erfindung die Festigkeitsträger der Festigkeitsträgerbahn mittels elektrisch leitender Fäden zu verbinden.

Bei einer bevorzugten Ausführungsform der Erfindung wird auf die Festigkeitsträgerbahn vor deren Eintritt in den Walzenspalt eine Vielzahl von einzelnen Fäden aufgelegt. Diese Maßnahme lässt sich auf einfache Weise und automatisch durchführen.

Bei einer weiteren Ausführungsvariante wird ein Gewebe oder ein Gestrick aus den Fäden gemeinsam mit der Festigkeitsträgerbahn dem Walzenspalt des Walzenkalanders zugeführt. Das Gewebe oder Gestrick lässt sich analog zur Oberplatte und zur Unterplatte zwischen den Platten dem Walzenspalt und daher ebenfalls auf einfache Weise zuführen. Erfindungsgemäß weist das Gewebe oder Gestrick eine Breite auf, die zumindest im Wesentlichen der Breite der Festigkeitsträgerbahn entspricht.

Bei einer noch weiteren erfindungsgemäßen Ausführungsvariante werden die Fäden als einzelne Fäden mit den Festigkeitsträgern verwebt. Auch diese Alternative lässt sich als automatisch ablaufende Maßnahme in die Herstellung der Materialbahn einbinden, indem beispielsweise die Festigkeitsträgerbahn über ein Gatter geführt wird, welches für ein abwechselndes Anheben von einigen Festigkeitsträgern sorgt. Die elektrisch leitenden Fäden können zwischen den angehobenen und den nicht angehobenen Festigkeitsträgern platziert werden.

Bei Alternativen der Erfindung, bei welchen einzelne Fäden verwendet werden, beträgt deren Länge vorzugsweise 2 cm bis 10 cm. Um eine möglichst komplette und gleichmäßige gegenseitig elektrisch leitende Verbindung zwischen den Festigkeitsträgern sicherzustellen, werden erfindungsgemäß die Fäden derart aufgelegt oder eingewebt, dass in Erstreckungsrichtung der Festigkeitsträgerbahn aufeinanderfolgende Fäden jeweils nur zum Teil auf den gleichen Festigkeitsträgern positioniert sind.

Auch die elektrisch leitenden Fäden können unterschiedlich ausgeführt sein. Bei einer möglichen Ausführungsvariante der Erfindung enthält die elektrisch leitende Beschichtung der Trägerfäden elektrisch leitende Partikel oder besteht aus solchen Partikeln, wie beispielsweise Rußpartikel, Graphitpulver oder Carbon-Nanotubes.

Bei einer weiteren bevorzugten Ausführungsform der Erfindung besteht die Beschichtung der Trägerfäden aus einem elastomerhaltigen Material.

Bei einer weiteren, besonders bevorzugten Ausführungsform der Erfindung ist die elektrisch leitende Beschichtung ein Haftvermittler, vorzugsweise ein RFL-Dip.

Eine gemäß der Erfindung hergestellte Materialbahn wird bei einer bevorzugten Ausführungsvariante zur Herstellung einer Verstärkungslage in einem Elastomerartikel verwendet. Diese Verstärkungslage kann nun vorteilhafterweise eine Gürtellage eines Fahrzeugluftreifens sein.

Die Erfindung betrifft ferner einen Fahrzeugluftreifen, welcher zumindest zwei Gürtellagen aufweist, die auf einer Materialbahn, welche gemäß dem erfindungsgemäßen Verfahren hergestellt ist, basieren.

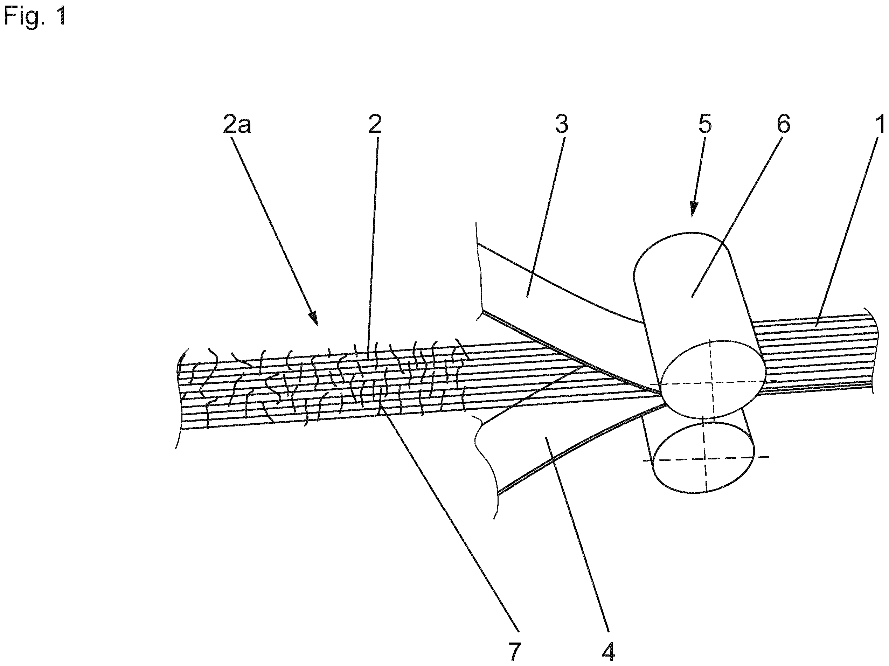

Weitere Merkmale, Vorteile und Einzelheiten der Erfindung werden nun anhand der Zeichnung, die schematisch ein Ausführungsbeispiel darstellt, näher beschrieben. Fig. 1 zeigt ein Verfahrensstadium während der Herstellung einer Materialbahn für eine Verstärkungslage.

Die nach dem erfindungsgemäßen Verfahren hergestellte Materialbahn 1 enthält eine Vielzahl von parallel zueinander verlaufenden Festigkeitsträgern 2 aus Stahl, insbesondere Stahlkorden herkömmlicher Konstruktion, die in eine Kautschukmischung eingebettet sind. Wird die Materialbahn 1 zur Herstellung einer Gürtellage in einem Gürtelverband eines Fahrzeugluftreifens verwendet, beträgt die Anzahl der Festigkeitsträger 2 pro Dezimeter Breite der Gürtellage beispielsweise 90 bis 120. In Gürtellagen verlaufen die Festigkeitsträger 2 üblicherweise unter einem bestimmten Winkel zur Umfangsrichtung des Fahrzeugluftreifens, sodass die Materialbahn 1 entsprechend zugeschnitten wird. Die Kautschukmischung, in welcher die Festigkeitsträger 2 eingebettet sind, wird als Gummierungsmischung bezeichnet und wird, wie es in Fig. 1 gezeigt ist, aus zwei Kautschukmischungsplatten, einer Oberplatte 3 und einer Unterplatte 4, hergestellt, die durch Kalandrieren hergestellte Kautschukmischungsbahnen sind. Die Oberplatte 3 und die Unterplatte 4 werden durch den Walzenspalt eines Walzenkalanders 5 geführt, wobei zwischen der Oberplatte 3 und der Unterplatte 4 die parallel zueinander verlaufenden Festigkeitsträger 2 unter Spannung durch den Walzenspalt geführt werden. Hinter dem Walzenkalander 5, der hier beispielhaft mit zwei Kalanderwalzen 6 dargestellt ist, verlässt die aus beidseitig gummierten Festigkeitsträgern 2 bestehende Materialbahn 1 den Walzenkalander 5.

Vor dem Eintreten in den Walzenspalt bilden die parallel zueinander verlaufenden Festigkeitsträger 2 eine Festigkeitsträgerbahn 2a, auf welche im Wesentlichen quer zur Längserstreckung der Festigkeitsträger 2 elektrisch leitfähige Fäden 7 aufgelegt werden. Die elektrisch leitfähigen Fäden 7 können im Wesentlichen gleich lang sein oder unterschiedliche Längen in der Größenordnung von einigen Zentimetern, insbesondere 2 cm bis 10 cm, aufweisen. Die Fäden 7 werden derart aufgelegt, dass in Erstreckungsrichtung der Festigkeitsträgerbahn 2a aufeinander folgende Fäden 7 jeweils möglichst nur teilweise auf den gleichen Festigkeitsträgern 2 positioniert sind. Die Fäden 7 müssen dabei nicht geradlinig aufgelegt sein, sondern können in einer gewissen Wirrlage aufgebracht sein. Die Fäden 7 können ohne oder mit gegenseitigen Kontaktstellen aufgebracht werden. Durch die Vielzahl an Fäden 7 werden mal diese, mal jene Festigkeitsträger 2 über die Länge der Festigkeitsträgerbahn 2a von Fäden 7 kontaktiert.

Bei einer weiteren nicht dargestellten Ausführungsvariante wird ein Gewebe oder Gestrick aus elektrisch leitenden Fäden zwischen der Oberplatte 3 und Unterplatte 4 gemeinsam mit der Festigkeitsträgerbahn dem Walzenspalt des Walzenkalanders 5 zugeführt.

Alternativ können einzelne elektrisch leitfähigen Fäden in die Festigkeitsträger 2 quer zur Erstreckungsrichtung der Festigkeitsträgerbahn 2a eingewebt werden. Dazu kann die Festigkeitsträgerbahn 2a über ein Gatter geführt werden, welches für ein abwechselndes Anheben von einigen Festigkeitsträgern sorgt, sodass die elektrisch leitenden Fäden zwischen den angehobenen und den nicht angehobenen Festigkeitsträgern 2 platziert, beispielsweise "hineingeschossen", werden können.

Die elektrisch leitfähigen Fäden 7 bestehen gemäß einer bevorzugten Ausführungsform der Erfindung jeweils aus einem Trägerfaden aus einem elektrisch nicht leitfähigen Material, welcher eine äußere Beschichtung bzw. Ummantelung aus einem elektrisch leitfähigen, vorzugsweise elastomerhaltigen Material aufweist. Die elektrisch leitende Beschichtung der Trägerfäden kann auch aus elektrisch leitenden Partikeln, beispielsweise Garphitpulver oder Carbonanotubes bestehen. Die Trägerfäden können beispielsweise aus Rayon, Polyester, Polyamid oder Aramid bestehen und ein Monofilament, ein Garn oder ein aus mehreren Garnen bestehender Kord sein. Die elektrisch leitfähige Beschichtung basiert beispielsweise auf einer Latex oder ein anderes Elastomer enthaltenden Suspension, in welcher elektrisch leitfähige Partikel, etwa Rußpartikel oder Graphitpulver, enthalten sind, wodurch die elektrische Leitfähigkeit der Beschichtung gewährleistet ist. Zur Herstellung dieser Beschichtung kann beispielsweise ein Rußpartikel enthaltender herkömmlicher Haftvermittler verwendet werden, der so weit flüssig ist, dass der aus textilem Material bestehende Trägerfaden mittels eines Dip-Vorganges beschichtet werden kann. Verwendet werden kann beispielsweise ein RFL-Dip (Resorzin-Formaldehyd-Latex-Dip), in welchem Rußpartikel, insbesondere N 339-Partikel oder N 121-Partikel eingemischt sind. Der Anteil an elektrisch leitfähigen Partikeln in der Suspension beträgt beispielsweise 10 Gew.-% bis 70 Gew.-%, insbesondere 30 Gew.-% bis 50 Gew.-%. Der als Endlosfaden hergestellte, elektrisch leitfähig beschichtete Faden wird in entsprechende kürzere Fäden 7 geschnitten.

Während des Kalandriervorganges im Walzenkalander 5 wird die Beschichtung der Fäden 7 in das Gummimaterial der Oberplatte 3 und der Unterplatte 4 eingebettet, sodass im Gummimaterial elektrisch leitfähige Passagen entstehen, die jeweils eine Anzahl von Festigkeitsträgern 2 elektrisch leitend miteinander verbinden. Bei der nachfolgenden Vulkanisation des Elastomerartikels, beispielsweise des Fahrzeugluftreifens, bleiben diese Passagen erhalten. Die Trägerfäden können während der Weiterverarbeitung der Materialbahn 1 ohne weiteres beschädigt oder zerkleinert werden, ihre mechanische Festigkeit ist nicht von Bedeutung. Etwaige an den seitlichen Rändern der kalandrierten Materialbahn 1 herausstehende Enden der Fäden 7 können abgeschnitten werden.

### Bezugsziffernliste

- 1: Materialbahn
- 2: Festigkeitsträger
- 2a: Festigkeitsträgerbahn
- 3: Oberplatte
- 4: Unterplatte
- 5: Walzenkalander
- 6: Kalanderwalze
- 7: Faden

## Patentansprüche

1. Verfahren zur Herstellung einer Materialbahn (1) aus in eine Kautschukmischung eingebetteten parallel zueinander verlaufenden Festigkeitsträgern (2) aus Stahl, mit folgenden Schritten:
a) Herstellung einer eine Oberplatte (3) bildenden Kautschukmischungsbahn und einer zweiten, eine Unterplatte (4) bildenden Kautschukmischungsbahn,
b) unter Spannung Hindurchführen einer Festigkeitsträgerbahn (2a) aus einer Vielzahl von parallel zueinander verlaufenden Festigkeitsträgern (2) durch den Walzenspalt eines Walzenkalanders (5),
c) Hindurchführen der Oberplatte (3) von der einen Seite und der Unterplatte (4) von der anderen Seite der Festigkeitsträgerbahn (2a) durch den Walzenspalt des Walzenkalanders (5) unter Zusammenfügen mit der Festigkeitsträgerbahn (2a),
**dadurch gekennzeichnet,**
**dass** die Festigkeitsträgerbahn (2a) vor oder bei ihrem Eintritt in den Walzenspalt mit einer Vielzahl von jeweils zumindest einen Teil der Festigkeitsträger (2) zumindest im Wesentlichen quer zur Erstreckungsrichtung der Festigkeitsträgerbahn (2a) kontaktierenden Fäden (7) versehen wird, welche aus elektrisch nicht leitenden textilen Trägerfäden bestehen, die mit einer Beschichtung aus einem elektrisch leitenden, Material versehen sind.

2. Verfahren nach Anspruch 1, **dadurch gekennzeichnet, dass** auf die Festigkeitsträgerbahn (2a) vor deren Eintritt in den Walzenspalt eine Vielzahl von einzelnen Fäden (7) aufgelegt wird.

3. Verfahren nach Anspruch 1, **dadurch gekennzeichnet, dass** ein Gewebe oder Gestrick aus den Fäden gemeinsam mit der Festigkeitsträgerbahn (2a) dem Walzenspalt des Walzenkalanders zugeführt wird.

4. Verfahren nach Anspruch 3, **dadurch gekennzeichnet, dass** die Breite des Gewebes oder Gestrickes zumindest im Wesentlichen der Breite der Festigkeitsträgerbahn (2a) entspricht.

5. Verfahren nach Anspruch 1, **dadurch gekennzeichnet, dass** die Fäden als einzelne Fäden mit den Festigkeitsträgern (2) verwebt werden.

6. Verfahren nach Anspruch 2 oder 5, **dadurch gekennzeichnet, dass** die Fäden (7) eine Länge aufweisen, die höchstens der Breite der Festigkeitsträgerbahn (2a) entspricht.

7. Verfahren nach Anspruch 2, 5 oder 6, **dadurch gekennzeichnet, dass** die Fäden (7) eine Länge von 2 cm bis 10 cm aufweisen.

8. Verfahren nach einem der Ansprüche 2 oder 5 bis 7, **dadurch gekennzeichnet, dass** die Fäden (7) derart aufgelegt oder eingewebt werden, dass in Erstreckungsrichtung der Festigkeitsträgerbahn (2a) aufeinander folgende Fäden (7) jeweils nur zum Teil auf den gleichen Festigkeitsträgern (2) positioniert sind.

9. Verfahren nach einem der Ansprüche 1 bis 8, **dadurch gekennzeichnet, dass** die elektrisch leitende Beschichtung der Trägerfäden elektrisch leitende Partikel, beispielsweise Rußpartikel, Graphitpartikel oder Carbon-Nanotubes, enthält oder aus solchen Partikeln besteht.

10. Verfahren nach einem der Ansprüche 1 bis 9, **dadurch gekennzeichnet, dass** die Beschichtung der Trägerfäden aus einem elastomerhaltigen Material besteht.

11. Verfahren nach einem der Ansprüche 1 bis 10, **dadurch gekennzeichnet, dass** die elektrisch leitende Beschichtung ein Haftvermittler, vorzugsweise ein RFL-Dip, ist.

12. Verfahren nach einem der Ansprüche 1 bis 11, **dadurch gekennzeichnet, dass** die Trägerfäden aus Rayon, Polyester, Polyamid oder Aramid bestehen.

13. Verwendung einer Materialbahn (1), welche gemäß dem Verfahren nach einem oder mehreren der Ansprüche 1 bis 11 hergestellt ist, zur Herstellung einer Verstärkungslage für einen Elastomerartikel.

14. Verwendung nach Anspruch 13, **dadurch gekennzeichnet, dass** die Verstärkungslage eine Gürtellage eines Fahrzeugluftreifens ist.

15. Fahrzeugluftreifen, welcher zumindest zwei Gürtellagen aufweist, die auf einer Materialbahn, welche gemäß dem Verfahren nach einem oder mehreren der Ansprüche 1 bis 12 hergestellt ist, basieren.

## Claims

1. Method for producing a material web (1) composed of strengthening members (2), which are embedded into a rubber mixture and which run parallel to one another and which are composed of steel, having the following steps:
a) producing a rubber mixture web that forms an upper plate (3) and a second rubber mixture web that forms a lower plate (4),
b) leading a strengthening member web (2a), which is composed of a multiplicity of strengthening members (2) running parallel to one another, under tension through the roll gap of a roll calender (5),
c) leading the upper plate (3) from one side of the strengthening member web (2a), and the lower plate (4) from the other side of the strengthening member web (2a), through the roll gap of the roll calender (5), with said upper plate and lower plate being joined together with the strengthening member web (2a),
**characterized**
**in that** the strengthening member web (2a) is, before or as it enters the roll gap, provided with a multiplicity of filaments (7) which produce contact between in each case at least some of the strengthening members (2) at least substantially transversely with respect to the direction of extent of the strengthening member web (2a), which filaments are composed of electrically non-conductive textile carrier filaments provided with a coating composed of an electrically conductive material.

2. Method according to Claim 1, **characterized in that** a multiplicity of individual filaments (7) is placed onto the strengthening member web (2a) before the latter enters the roll gap.

3. Method according to Claim 1, **characterized in that** a woven fabric or knit composed of the filaments is supplied together with the strengthening member web (2a) to the roll gap of the roll calender.

4. Method according to Claim 3, **characterized in that** the width of the woven fabric or knit at least substantially corresponds to the width of the strengthening member web (2a).

5. Method according to Claim 1, **characterized in that** the filaments are woven as individual filaments with the strengthening members (2).

6. Method according to Claim 2 or 5, **characterized in that** the filaments (7) have a length which corresponds at most to the width of the strengthening member web (2a).

7. Method according to Claim 2, 5 or 6, **characterized in that** the filaments (7) have a length of from 2 cm to 10 cm.

8. Method according to any of Claims 2 or 5 to 7, **characterized in that** the filaments (7) are placed on or woven in such that successive filaments (7) in the direction of extent of the strengthening member web (2a) are in each case only partially positioned on the same strengthening members (2).

9. Method according to any of Claims 1 to 8, **characterized in that** the electrically conductive coating of the carrier filaments comprises or is composed of electrically conductive particles, for example carbon black particles, graphite particles or carbon nanotubes.

10. Method according to any of Claims 1 to 9, **characterized in that** the coating of the carrier filaments consists of an elastomeric material.

11. Method according to any of Claims 1 to 10, **characterized in that** the electrically conductive coating is an adhesion promoter, preferably an RFL dip.

12. Method according to any of Claims 1 to 11, **characterized in that** the carrier filaments are composed of rayon, polyester, polyamide or aramid.

13. Use of a material web (1), produced in accordance with the method according to one or more of Claims 1 to 11, for producing a reinforcement ply for an elastomer article.

14. Use according to Claim 13, **characterized in that** the reinforcement ply is a belt ply of a pneumatic vehicle tyre.

15. Pneumatic vehicle tyre which has at least two belt plies which are based on a material web produced in accordance with the method according to one or more of Claims 1 to 12.

## Revendications

1. Procédé de fabrication d'une bande de matière (1) à partir d'éléments porteurs à haute résistance (2) en acier s'étendant parallèlement entre eux et noyés dans un mélange de caoutchouc, le procédé comprenant les étapes suivantes :
a) produire une bande de mélange de caoutchouc formant une plaque supérieure (3) et une deuxième bande de mélange de caoutchouc formant une plaque inférieure (4),
b) faire passer une bande d'éléments porteurs à haute résistance (2a) sous tension, formée d'une pluralité d'éléments porteurs à haute résistance (2) s'étendant parallèlement entre eux, dans l'emprise d'une calandre à rouleaux (5),
c) faire passer la plaque supérieure (3) depuis un côté, et la plaque inférieure (4) depuis l'autre côté, de la bande d'éléments porteurs à haute résistance (2a) dans l'emprise de la calandre à rouleaux (5) pour les assembler avec la bande d'éléments porteurs à haute résistance (2a),
**caractérisé en ce que**
avant qu'elle ne pénètre, ou lorsqu'elle pénètre, dans l'emprise des rouleaux, la bande d'éléments porteurs à haute résistance (2a) est pourvue d'une pluralité de fils (7) qui viennent chacun en contact avec au moins une partie des éléments porteurs à haute résistance (2) au moins sensiblement transversalement à la direction d'extension de la bande d'éléments porteurs à haute résistance (2a) et qui sont formés de fils porteurs textiles électriquement non conducteurs qui sont pourvus d'un revêtement en matière électriquement conductrice.

2. Procédé selon la revendication 1, **caractérisé en ce qu'**une pluralité de fils individuels (7) sont placés sur la bande d'éléments porteurs à haute résistance (2a) avant qu'ils ne pénètrent dans l'emprise des rouleaux.

3. Procédé selon la revendication 1, **caractérisé en ce qu'**un tissu ou tricot formé des fils est amené conjointement avec la bande d'éléments porteurs à haute résistance (2a) à l'emprise de la calandre à rouleaux.

4. Procédé selon la revendication 3, **caractérisé en ce que** la largeur du tissu ou du tricot correspond au moins sensiblement à la largeur de la bande d'éléments porteurs à haute résistance (2a).

5. Procédé selon la revendication 1, **caractérisé en ce que** les fils sont tissés en tant que fils individuels avec les éléments porteurs à haute résistance (2).

6. Procédé selon la revendication 2 ou 5, **caractérisé en ce que** les fils (7) ont une longueur qui correspond au plus à la largeur de la bande d'éléments porteurs à haute résistance (2a).

7. Procédé selon la revendication 2, 5 ou 6, **caractérisé en ce que** les fils (7) ont une longueur de 2 cm à 10 cm.

8. Procédé selon l'une des revendications 2 ou 5 à 7, **caractérisé en ce que** les fils (7) sont placés ou tissés de telle manière que des fils (7) qui se suivent dans la direction d'extension de la bande d'éléments porteurs à haute résistance (2a) sont chacun positionnés seulement partiellement sur les mêmes éléments porteurs à haute résistance (2).

9. Procédé selon l'une des revendications 1 à 8, **caractérisé en ce que** le revêtement électriquement conducteur des fils porteurs contient des particules électriquement conductrices, par exemple des particules de suie, des particules de graphite ou des nanotubes de carbone, ou est formé de telles particules.

10. Procédé selon l'une des revendications 1 à 9, **caractérisé en ce que** le revêtement des fils porteurs est formé à partir d'un matériau contenant un élastomère.

11. Procédé selon l'une des revendications 1 à 10, **caractérisé en ce que** le revêtement électriquement conducteur est un promoteur d'adhérence, de préférence un RFL-dip.

12. Procédé selon l'une des revendications 1 à 11, **caractérisé en ce que** les fils porteurs sont formés à partir de rayonne, de polyester, de polyamide ou d'aramide.

13. Utilisation d'une bande de matière (1), qui est produite selon le procédé de l'une au moins des revendications 1 à 11, dans la fabrication d'une couche de renforcement d'un article en élastomère.

14. Utilisation selon la revendication 13, **caractérisée en ce que** la couche de renforcement est une nappe d'armature d'un pneumatique de véhicule.

15. Pneumatique de véhicule, qui comporte au moins deux nappes d'armature qui sont basées sur une bande de matière qui est produite selon le procédé de l'une au moins des revendications 1 à 12.
